# EUROPEAN PATENT SPECIFICATION

(11) **EP 1 734 285 B1**
(45) Date of publication and mention of the grant of the patent: **12.01.2011**
(21) Application number: 06115461.3
(22) Date of filing: 14.06.2006
(51) Int. Cl.: F16H 25/22

(54) **Ball screw**
Kugelgewindetrieb
Vis à billes

(30) Priority: 16.06.2005 JP 2005176503
(43) Date of publication of application: 20.12.2006
(73) Proprietor: NTN Corporation, Osaka (JP)
(72) Inventor: Kazuno, Keisuke, Shizuoka-ken (JP)
(74) Representative: Cohausz & Florack

(56) References cited:
- EP-A- 1 245 868
- EP-A- 1 318 331
- WO-A-2004/106775
- JP-A- 2003 314 659
- JP-A- 2004 257 466
- JP-A- 2005 001 003

## Description

### BACKGROUND OF THE INVENTION

### Field of the Invention

The present invention relates to a ball screw formed with a helical screw groove in which a large number of balls roll and more particularly to a ball screw on which not only a thrust load but a radial load and a moment load are applied.

### Description of Background Art

In general, the ball screw is a mechanical element for converting a rotation of a screw shaft or nut to a axial translation of a mechanical part and comprises a screw shaft formed on its outer circumferential surface with a helical screw groove, a nut formed on its inner circumferential surface with a helical screw groove, a number of balls rollably contained within a ball rolling passage formed by oppositely arranged screw grooves. In general, the ball screw used for industrial machines and positioning mechanisms has a structure so that it mainly supports only a pure thrust load. Accordingly the radial load and the moment load are directly applied to a nut and a screw shaft in such a ball screw. For example, when the ball screw is solely used without using any linear guide, it is usual to use other structural parts separately from the ball screw because of being caused imbalance in the inside supporting load distribution.

On the other hand it has been common in ball screws used in actuators for an automobile that a compound load comprising thrust load, radial load and moment load is applied to the ball screw for corresponding to requirement to structural limitations in the actuator to reduce its size and manufacturing cost. One example of this includes an actuator used for a variable valve mechanism and a transmission of an engine.

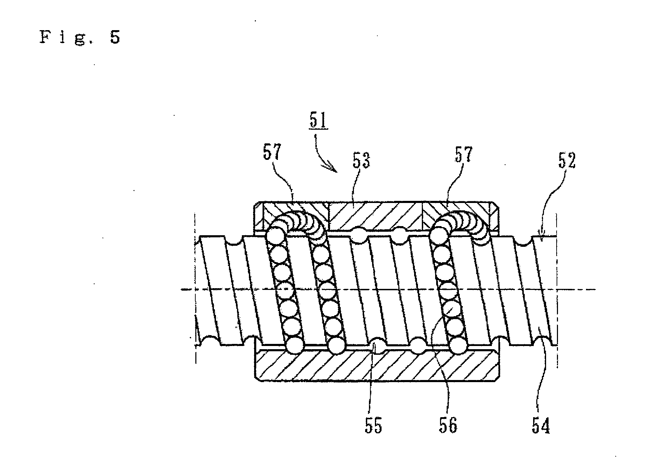

It is afraid that the durability of the ball screw is appreciably reduced due to increase of the contacting surface pressure caused by unevenness of inside load distribution of ball screw and thus by reduction of the number of loading balls when the compound load of the radial and moment loads other than the pure thrust load are applied to the ball screw. For achieving such a problem, the applicant of the present application has proposed a ball screw as shown in Fig. 5.

A ball screw 51 comprises a screw shaft 52 formed on its outer circumferential surface with a helical screw groove 54, a nut 53 formed on its inner circumferential surface with a helical screw groove 55 corresponding to the screw groove 54, a number of balls 56 rollably contained within a ball rolling passage formed by oppositely arranged screw grooves 54, 55, and bridge members 57 for connecting screw grooves 55 of the nut 53. Since the bridge members 57 are arranged at opposite ends of the nut 53 so that they are inclined about 90° toward the circumferential direction relative to a direction along which the moment load is generated, it is possible to eliminate balls to be arranged at the axially central portion of the nut 53. Thus it is possible to reduce the manufacturing cost of the ball screw and to improve its durability due to increase of the load supporting capacity of both the radial and moment loads of the ball screw 51 (see Japanese Laid-open Patent Publication No. 169740/2004, published as JP 2004169740).

### Disclosure of the Invention

### Problems to be solved by the Invention

Although the ball screw 51 of the prior art is effective when the directions of the generated radial load and moment load are constant, it is afraid that not only the effect cannot be expected but the durability is reduced when a plural directions of the generated radial load and moment load exist or when the ball screw 51 is used in a manner so that the nut 53 is rotated.
Document WO 2004/106775 which constitutes the closest prior art shows all the features of the preamble of claim 1.

### SUMMARY OF THE INVENTION

It is, therefore, an object of the present invention to provide a ball screw which can solve the problems of the prior art and can improve the durability of the ball screw under the circumstances in which the radial load and the moment load are applied to it.

### Means for solving the problems

For achieving the object, there is provided, according to the present invention of claim 1, a ball screw comprising a screw shaft formed on its outer circumferential surface with a helical screw groove, a nut adapted to mate with the screw shaft and formed on its inner circumferential surface with a helical screw groove corresponding to the screw groove of the screw shaft, a number of balls rollably contained within a ball rolling passage formed by the oppositely arranged screw grooves, and bridge members each formed on its inner circumferential surface with a connecting groove for connecting the screw grooves of the nut characterized in that the contact angle between the ball and the screw groove is set within a range of 20∼40° and the groove depth of the screw groove is set at 35% or less than the outer diameter of the ball. This enables to substantially elongate the length of the land portion of the screw groove and thus it is possible to reduce the rotational torque of the ball screw, the size of a driving motor and its power consumption.

According to the ball screw of claim 1, since the contact angle between the ball and the screw groove is set within a range of 20~40°, the load distribution of balls within the ball screw is made uniform in the driving portion of an actuator for automobile in which the compound load comprising the radial load and the moment other than the pure thrust load are applied to the ball screw, and thus it is possible to improve the durability due to reduction of the contact surface pressure of each ball.

It is preferable as defined in claim 2 that the outer diameter of each ball is set within 75~110% of the lead of the ball screw1. This enables to prevent reduction of the loading capacity to the thrust load.

It is also preferable as defined in claim 3 that the ball screw is used for a driving portion of an actuator for an automobile. This enables to improve the durability of an actuator due to improvement of the life time of ball screw.

### Effects of the Invention

According to a ball screw of the present invention, since it comprises a screw shaft formed on its outer circumferential surface with a helical screw groove, a nut adapted to mate with the screw shaft and formed on its inner circumferential surface with a helical screw groove corresponding to the screw groove of the screw shaft, a number of balls rollably contained within a ball rolling passage formed by the oppositely arranged screw grooves, and bridge members each formed on its inner circumferential surface with a connecting groove for connecting the screw grooves of the nut and is characterized in that the contact angle between the ball and the screw groove is set within a range of 20~40°, the load distribution of balls within the ball screw is made uniform in the driving portion e.g. of an actuator for automobile in which the compound load comprising the radial load and the moment other than the pure thrust load are applied to the ball screw, and thus it is possible to improve the durability due to reduction of the contact surface pressure of each ball.

### Best mode for carrying out the Invention

The best mode for carrying out the present invention is a ball screw comprising a screw shaft formed on its outer circumferential surface with a helical screw groove, a nut adapted to mate with the screw shaft and formed on its inner circumferential surface with a helical screw groove corresponding to the screw groove of the screw shaft, a number of balls rollably contained within a ball rolling passage formed by the oppositely arranged screw grooves, and bridge members each formed on its inner circumferential surface with a connecting groove for connecting the screw grooves of the nut characterized in that the contact angle between the ball and the screw groove is set within a range of 20~40°, the outer diameter of the ball is set within a range 75~80% of the lead of the screw groove, and the groove depth of the screw groove is set at 35% or less than outer diameter of the ball.

### BRIEF DESCRIPTION OF THE DRAWINGS

Additional advantages and features of the present invention will become apparent from the subsequent description and the appended claims, taken in conjunction with the accompanying drawings, wherein:
- Fig. 1(a): is a front elevation view of the ball screw of the present invention;
- Fig. 1 (b): is a longitudinal section view of a ball screw of Fig. 1(a);
- Fig. 2: is a graph showing a relation between the contact angle and the life time of a ball screw of bridge type;
- Fig. 3: is a graph showing the contact surface pressure generated in a ball of a ball screw of bridge type respectively in case of the contact angle of 45° and 30°;
- Fig. 4(a): is an explanatory view of a configuration of the groove portion of a ball screw in which the contact angle is 45° and the groove depth is 40% of the ball diameter;
- Fig. 4(b): is an explanatory view of a configuration of the groove portion of a ball screw in which the contact angle is 30° and the groove depth is 30% of the ball diameter; and
- Fig. 4(c): is an explanatory view of a configuration of the groove portion of a ball screw in which the contact angle is 30°, the groove depth is 31% of the ball diameter and the lead is same as that of the ball screw having the contact angle 45°.

### DESCRIPTION OF THE PREFERRED EMBODIMENTS

### [Embodiment]

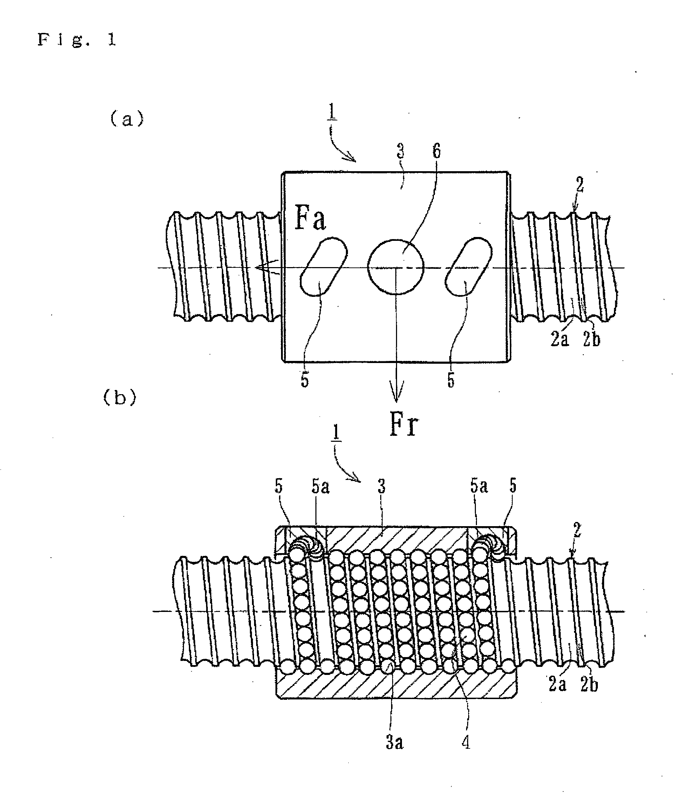

Preferred embodiments of the present invention will be described with reference to the accompanying drawings. Fig. 1(a) is a front elevation view of the ball screw of the present invention and Fig. 1 (b) is a longitudinal section view of a ball screw of Fig. 1(a).
The ball screw 1 of the present invention comprises a screw shaft 2 formed on its outer circumferential surface with a helical screw groove 2a, a nut 3 adapted to mate with the screw shaft 2 and formed on its inner circumferential surface with a helical screw groove 3a corresponding to the screw groove 2a of the screw shaft 2, a number of balls 4 rollably contained within a ball rolling passage formed by the oppositely arranged screw grooves, and bridge members 5 each adapted to be fitted on the barrel of the nut 3 and formed on its inner circumferential surface with a connecting groove 5a for connecting the screw grooves 3a of the nut 3. A ball rolling passage is formed by the screw grooves 2a, 3a and the number of balls 4 can be endless circulated through the connecting groove 5a of the bridge members 5.

Each of the screw grooves 2a, 3a has a Gothic arch cross-section formed by a combination of two circular arcs each having a radius of curvature slightly larger than that of the ball 4. It is of course that the screw grooves 2a, 3a can be formed as having a circular arc to which the ball 4 can circular contact, other than the Gothic arch configuration.

A pair of cylindrical trunnion 6 are arranged oppositely extending from the outer circumferential surface of the nut 3 perpendicularly to its axis. The trunnions 6 are inserted to a housing (not shown) so as to prevent the rotation of the nut 3 and the ball screw 1 is supported swingably around the axis of the trunnions 6.

The depth of the connecting groove 5a of the bridge member 5 is set so that the balls 4 can climb over the land portions 2b of the screw grooves 2a of the screw shaft 2. In addition the bridge member 5 is designed so that non-loading region is formed within the bridge member 5 with keeping a ball rolling space within the bridge member 5.

In general, in the ball screw used in an actuator for a vehicle, the contact angle between the ball and the screw shaft is set about 45°. However in this embodiment, the contact angle is set so that it is shifted toward the bottom side. That is, the contact angle is set within a range of 20~40° so as to have a higher loading capacity relative to the radial load. It is possible to make the loading distribution of balls 4 within the ball screw 1 uniform and thus to improve the ball screw 1 due to reduction of the contact surface pressure of each ball 4 by setting the contact angle smaller than that of the prior art.

The shift of the contact angle of the ball 4 toward the groove bottom can be easily achieved only by modifying the groove configuration of a roll dice used for rolling the screw shaft 2 and by modifying the tip configuration of a tapping tool used for tapping the nut 3.

In this embodiment, the reduction of the loading capacity is prevented by increasing the outer diameter of the ball 4 since the loading capacity relative to the thrust load is reduced if the contact angle of the ball 4 is reduced. In usual, the ball diameter in such a ball screw is set within a range of 65∼70% of the lead of the screw groove. This is because that the return tube type has been used for the ball circulating mechanism. That is, in the ball screw of return tube type, according to the facts that the number of circulation turn is usually set at 1.5∼3.5 turns, that the balls are continuously contained within adjacent screw grooves, and that these screw grooves and the return tube have to be arranged with keeping a suitable space therebetween, thus it is inevitable to use the ball having the diameter of 65~70% of the lead of the screw groove.

According to this embodiment of the present invention, since the bridge type is adopted as the ball circulating mechanism, the number of circulation turn becomes 1 or less and thus it is unnecessary to continuously contain balls 4 within adjacent screw grooves 3a, it is possible to set the outer diameter of ball 4 larger than that of the prior art. In this embodiment the ball diameter is set within a range 75∼110% of the lead of the screw groove.

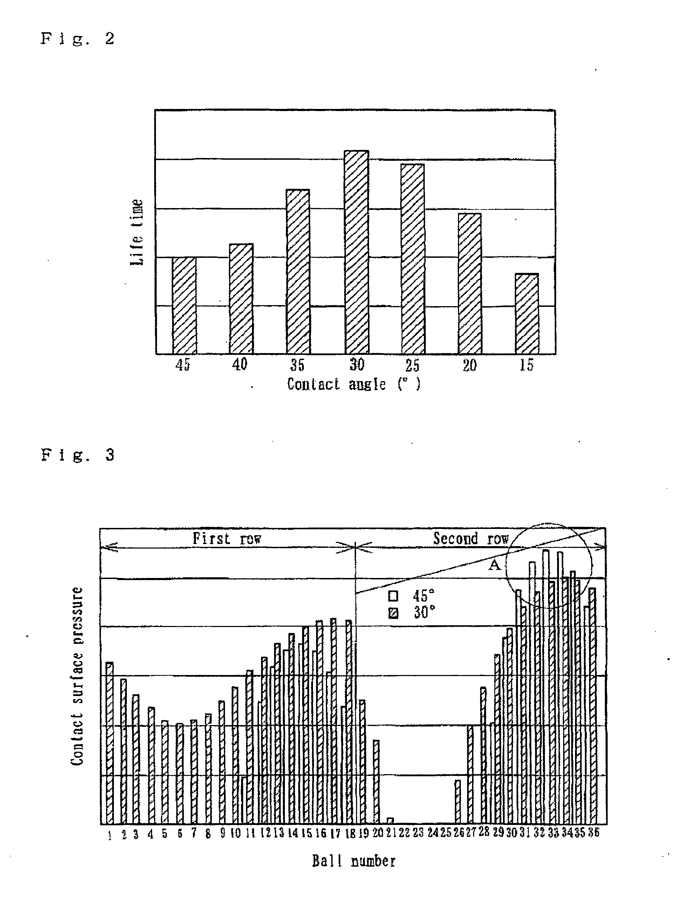

Fig. 2 is a graph showing results of the life time of a ball screw of the prior art i.e. a ball screw of the bridge type having the contact angle of 45° obtained by calculating the life time with gradually reducing the contact angle. This calculation was carried out by using a ball screw having a specification; a diameter of a screw shaft: 15 mm, a lead of the screw groove: 3.5 mm, a number of the circulation row: 2, a diameter of the ball: 2.381 mm (corresponding to 68% of the lead of the screw groove), and a radial gap: 0.015 mm. Loading conditions were 200 N both in the radial load Fr and the thrust load Fa.

It is found that the life time of the ball screw can be improved 1.1~2.1 times that of the prior art within a range of the contact angle of 20~40° under a condition in which the compound load of the radial load Fr and the thrust load Fa is applied to the ball screw. However it is also found that the life time is reduced 0.8 times the prior art when the contact angle is less than 15°.

Fig. 3 is a graph showing the contact surface of the ball screw having the contact angle of 45°and that of the ball screw having the contact angle 30° exhibited most excellent result in the life time calculation as to Fig. 2. It can be appreciated that the load distribution of balls is made more uniform in the ball screw having the contact angle of 30° than that having the contact angle of 45° under the working condition in which the compound load of the radial load Fr and the thrust load Fa is applied to the ball screw. This is supposed that the displacement of the nut due to elastic deformation of ball will cause a balancing effect against the applied load. That is, as shown in Fig. 1, since the nut 3 is displaced downward against the radial load Fr and is balanced with the applied load, the balls 4 contacting the screw groove 3a and supporting the load are collected in the upper side of the nut 3 and the balls 4 in the lower side occupy a non-contact condition and thus do not support any load. However since the contact points of balls 4 are shifted toward the groove bottom by setting the contact angle to a smaller angle of 30° from 45°, the amount of the elastic displacement of the balls 4 downward of the nut 3 is reduced. Accordingly the number of balls 4 contacting the screw groove 3a, i.e. the number of the loaded balls 4 is increased. As can be seen from the calculated results shown in Fig. 3, it is found that all the balls 4 of the first row (i.e. ball number 1∼18) occupy the contacted condition and the number of the loaded balls 4 are also increase in the second row (i.e. ball number 19~36).

In addition, it will be found that the loading capacity relative to the radial load Fr is also increased in addition to the increase of the number of loaded balls 4 and thus the maximum contact surface pressure (shown by "A" in Fig. 3) is reduced. The reduction of the maximum contact surface pressure can increase the life time of the ball screw 1 and thus improves the durability of the actuator.

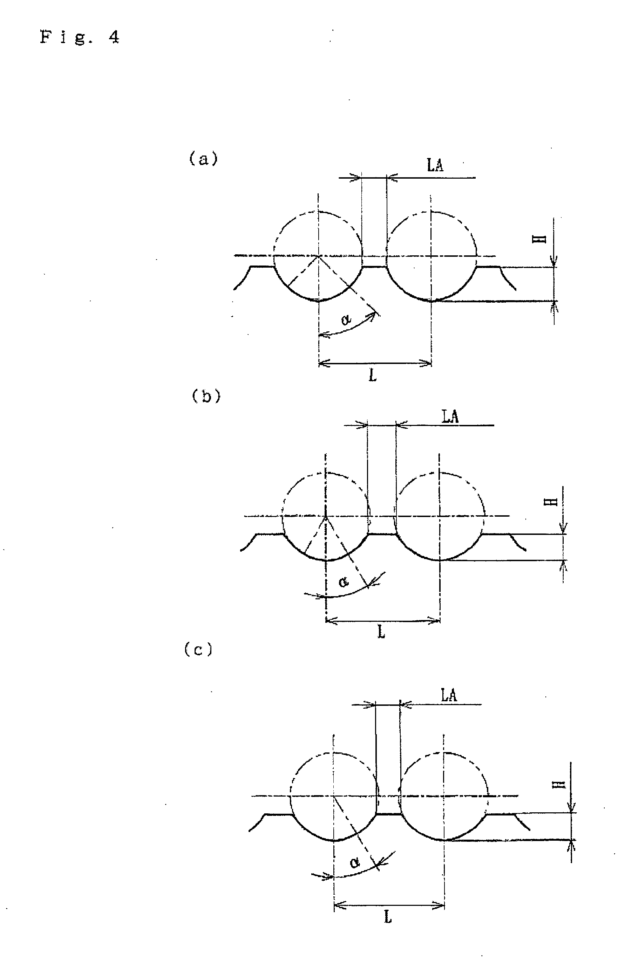

Fig. 4(a) shows a configuration in longitudinal section of the groove of a ball screw. In this example, when the ball diameter is 2.381 mm, if setting the contact angle α = 45°, the lead L=3 mm, and the groove depth H=40% of the ball diameter as in a ball screw of the prior art, the length LA of the land portion becomes 0.64 mm. On the contrary, as shown in Fig. 4(b), when the lead L is 3 mm as conventional, the length LA of the land portion becomes 0.74 mm and thus is increased by 0.1 mm than that of the prior art by setting the contact angle α=30°, and the groove depth H=31% of the ball diameter.

On the other hand, as shown in Fig. 4(c), when the length LA of the land portion is 0.64 mm as conventional, the lead L becomes 2.9 mm and thus is increased by 0.1 mm than that of the prior art by setting the contact angle α=30°, and the groove depth H=31% of the ball diameter. That is, it is possible to reduce the groove depth H (i.e. the height of the groove shoulder relative to the groove bottom) by setting the contact angle α small, and also it is possible to reduce the lead L by setting the length LA of the land portion same as that of the prior art.

In this case, it is possible to describe the relation between the thrust load FA applied to the ball screw and the rotational torque T generated on the ball screw as T=Fa - L / 2 π η. As can be seen from this formula, the rotational torque T generated on the ball screw is proportional to the lead L. "η" is the efficiency of the ball screw and if η is about 0.9, the rotational torque T can be reduced by about 3.5% due to the reduction of the lead L from 3 mm to 2.9 mm. Accordingly the reduction of the lead L enables to reduce the rotational torque T applied to the actuator by the load, the size of motor and the power consumption. In addition, it is possible to reduce the number of working step and working resistance as well as the manufacturing cost of the ball screw by setting a small groove depth.

### [Applicability to industry]

The ball screw of the present invention can be applied to a driving portion of an actuator for vehicle.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

## Claims

1. A ball screw (1) comprising:
- a screw shaft (2) formed on its outer circumferential surface with a helical screw groove (2a),
- a nut (3) adapted to mate with the screw shaft (2) and formed on its inner circumferential surface with a helical screw groove (3a) corresponding to the screw groove (2a) of the screw shaft (2),
- a number of balls (4) rollably contained within a ball rolling passage formed by the oppositely arranged screw grooves (2a, 3a), and
- bridge members (5) each formed on its inner circumferential surface with a connecting groove (5a) for connecting the screw grooves (3a) of the nut (3) wherein
- the contact angle (α) between the ball (4) and the screw groove (2a, 3a) is set within a range of 20° - 40°, **characterized in that**:
- the groove depth (H) of the screw groove (2a, 3a) is set at 35% or less than the outer diameter of the ball (4).

2. A ball screw of claim 1 wherein the outer diameter of each ball (4) is set within 75% - 110% of the lead (L) of the ball screw (1).

3. A ball screw of any one of claims 1-2 wherein it is used for a driving portion of an actuator for an automobile.

## Patentansprüche

1. Kugelgewindetrieb (1), umfassend:
- eine Spindel (2), die an ihrer äußeren Umfangsfläche mit einer schraubenförmigen Laufrille (2a) ausgeführt ist,
- eine Mutter (3), die zur Verbindung mit der Spindel (2) geeignet ist und an ihrer inneren Umfangsfläche mit einer schraubenförmigen Laufrille (3a) ausgeführt ist, die der Laufrille (2a) der Spindel (2) entspricht,
- eine Anzahl von Kugeln (4), die wälzfähig in einem Kugelwälzdurchgang enthalten sind, der durch die einander gegenüberliegend angeordneten Laufrillen (2a, 3a) gebildet ist, und
- Brückenelemente (5), die jeweils an ihrer inneren Umfangsfläche mit einer Verbindungsnut (5a) zur Verbindung der Laufrillen (3a) der Mutter (3) ausgeführt ist, wobei
- der Kontaktwinkel (α) zwischen der Kugel (4) und der Laufrille (2a, 3a) auf einen Bereich von 20° bis 40° eingerichtet ist, **dadurch gekennzeichnet, dass**
- die Rillentiefe (H) der Laufrille (2a, 3a) auf 35 % oder weniger des Außendurchmessers der Kugel (4) eingerichtet ist.

2. Kugelgewindetrieb nach Anspruch 1, wobei der Außendurchmesser jeder Kugel (4) auf 75 % bis 110 % der Steigung (L) des Kugelgewindetriebs (1) eingerichtet ist.

3. Kugelgewindetrieb nach einem der Ansprüche 1 bis 2, wobei er für einen Antriebsabschnitt eines Aktuators für ein Kraftfahrzeug verwendet wird.

## Revendications

1. Vis à billes (1), comprenant :
- une tige filetée (2), présentant sur sa surface extérieure, un filet hélicoïdal (2a),
- un boulon (3) adapté pour s'assembler avec la tige filetée (2) et présentant sur sa surface interne, un filet hélicoïdal (3a) correspondant au filet hélicoïdal (2a) de la tige filetée (2),
- un certain nombre de billes (4) présentes dans un passage de roulement des billes formé par les filets opposés (2a, 3a), et
- des éléments de pontage (5) formés chacun sur la surface interne avec une rainure de connexion (5a) pour connecter les filets (3a) du boulon (3), où
- l'angle de contact (α) entre la bille (4) et le filet (2a, 3a) est réglé au sein de la plage 20° - 40°, **caractérisé en ce que**
- la profondeur de rainure (H) du filet (2a, 3a) est réglée à 35% ou moins du diamètre extérieur de la bille (4).

2. Vis à billes selon la revendication 1, où le diamètre extérieur de chaque bille (4) se situe dans l'intervalle allant de 75% à 110% du pas (L) de la vis à billes (1).

3. Vis à billes selon l'une quelconque des revendications 1 et 2, qui est utilisée pour l'entrainement d'un actionneur d'automobile.
